# EUROPEAN PATENT APPLICATION

(11) **EP 4 510 411 A2**
(43) Date of publication of application: **19.02.2025**
(21) Application number: 24192100.6
(22) Date of filing: 31.07.2024
(51) Int. Cl.: H02J 3/38, H02J 13/00

(54) **ENERGY MANAGEMENT STATE MACHINE FOR MICROGRIDS**

(30) Priority: 01.08.2023 US 202318363375
(71) Applicant: ABB SCHWEIZ AG, 5400 Baden (CH)
(72) Inventor: JOSHI, Aniket M., Raleigh, 27606 (US); MISCIO, Jacob T., Raleigh, 27601 (US); CHOOBINEH, Moein, Morrisville, 27560 (US); SURYANARAYANA, Harish, Apex, 27523 (US)
(74) Representative: Maiwald GmbH

(57) **Abstract**

A method of monitoring a microgrid includes receiving a plurality of inputs, using a state machine to determine an output based on the plurality of inputs, and outputting a control signal based on the output. The plurality of inputs include a microgrid-side voltage measurement and a microgrid-side frequency measurement. The control signal is configured to control operation of the microgrid at a point of common coupling between the microgrid and a utility grid.

## Description

### FIELD

The present disclosure relates to methods for supervising microgrids and supervisory algorithms for microgrids.

### BACKGROUND OF THE INVENTION

State machines are used as behavioral models that, based on a current state and given inputs, produces an output. Due to their usefulness in organizing process flows and defining outputs based on multiple states of a system, state machines are widely utilized as the basis for various control and supervising algorithms. Conventional state machines, however, are based on a very generic outlook that has been envisioned in terms of functioning as a controller rather than an operating condition selector for systems. Furthermore, the boundaries of conventional state machines are frequently not clearly defined.

In electrical grids, and particularly in microgrids and/or low voltage microgrids, control systems must be implemented to control production and/or distribution of electrical power from multiple sources of different types. Microgrid monitoring and analysis may be carried out by a processor-based control system configured to deliver electrical power based on schedules or based on regional control modules. However, individual devices making up a microgrid have varying compliance standards and requirements, which may lead to reduced compliance of the microgrid overall or of some devices within the microgrid.

Accordingly, there is a need for improved methods for supervising microgrids to improve compliance of microgrids and microgrid devices and to ensure compliance standards are met.

### BRIEF SUMMARY OF THE INVENTION

A method of monitoring a microgrid, comprising receiving a plurality of inputs, using a state machine to determine an output based on the plurality of inputs, and outputting a control signal based on the output. The plurality of inputs include a microgrid-side voltage measurement and a microgrid-side frequency measurement. The control signal is configured to control operation of the microgrid at a point of common coupling between the microgrid and a utility grid.

According to an embodiment, a method of monitoring a microgrid is provided, comprising: receiving a plurality of inputs; using a state machine to determine an output based on the plurality of inputs; and outputting a control signal based on the output, wherein the plurality of inputs include a microgrid-side voltage measurement and a microgrid-side frequency measurement; and wherein the control signal is configured to control operation of the microgrid at a point of common coupling between the microgrid and a utility grid.

According to an embodiment, using the state machine to determine the output based on the plurality of inputs further comprises determining the output based on at least a first priority function and a second priority function, wherein the first priority function receives one or more of the plurality of inputs to determine a first priority function output, and wherein the second priority function receives one or more of the plurality of inputs and the first priority function output to determine a second priority function output.

According to an embodiment, the one or more inputs received by the first priority function include the microgrid-side voltage measurement and the microgrid-side frequency measurement.

According to an embodiment, the first priority function output and the second priority function output are each one of a voltage or frequency ride-through selection, an unplanned islanding signal, action dependent on a distribution system operator command, and an action dependent on a user preference.

According to an embodiment, the one or more inputs received by the second priority function include one or more of a maintenance status, an anticipated outage, a utility grid health indicator, and a distribution system operator setpoint.

According to an embodiment, using the state machine to determine the output based on the plurality of inputs further comprises determining the output based on a third priority function, wherein the third priority function receives one or more of the plurality of inputs and the second priority function output to determine a third priority function output.

According to an embodiment, the one or more inputs received by the third priority function include one or more of a user preference and an error handling signal.

According to an embodiment, the third priority function output is one of a voltage or frequency ride-through selection, an unplanned islanding signal, a regulation curve selection, an active and reactive power setpoint disabling signal, and a load or source management signal for managing devices of the microgrid.

According to an embodiment, the method further comprises: measuring microgrid-side operational parameters; updating the plurality of inputs based on the measured microgrid-side operational parameters; and iteratively repeating the steps of the method such that the state machine receives iteratively updated inputs based on the measured microgrid-side operational parameters, wherein the operational parameters include a voltage and frequency of the microgrid.

According to an embodiment, the operational parameters further include one or more of an active power measured at the point of common coupling, a reactive power measured at the point of common coupling, a battery state of charge, and microgrid loading information.

According to an embodiment, the control signal is configured to operate the microgrid in compliance with standards set forth in Institute of Electrical and Electronics Engineers (IEEE) 1547 or Comitato Elettrotecnico Italiano (CEI) 0-16.

According to an embodiment, the control signal is configured to operate the microgrid with a ride-through voltage or ride-through frequency in compliance with IEEE 1547 or CEI 0-16.

According to an embodiment, the control signal is configured to island the microgrid if the plurality of inputs include abnormal voltage and frequency signals from the microgrid.

According to an embodiment, a non-transitory computer-readable medium is provided, having processor-executable instructions stored thereon, wherein the processor-executable instructions, when executed by one or more processors, facilitate performance of a method as described above and below, for monitoring a microgrid comprising: receiving a plurality of inputs; using a state machine to determine an output based on the plurality of inputs; and outputting a control signal based on the output, wherein the plurality of inputs include a microgrid-side voltage measurement and a microgrid-side frequency measurement; and wherein the control signal is configured to control operation of the microgrid at a point of common coupling between the microgrid and a utility grid.

According to an embodiment, a system is provided, comprising one or more processors which, alone or in combination, are configured to provide for execution of a method as described above and below, comprising: receiving a plurality of inputs; using a state machine to determine an output based on the plurality of inputs; and outputting a control signal based on the output, wherein the plurality of inputs include a microgrid-side voltage measurement and a microgrid-side frequency measurement; and wherein the control signal is configured to control operation of the microgrid at a point of common coupling between the microgrid and a utility grid.

### BRIEF DESCRIPTION OF THE SEVERAL VIEWS OF THE DRAWINGS

Subject matter of the present disclosure will be described in even greater detail below based on the exemplary figures. All features described and/or illustrated herein can be used alone or combined in different combinations. The features and advantages of various implementations will become apparent by reading the following detailed description with reference to the attached drawings, which illustrate the following:
FIG. 1 illustrates an energy management state machine flowchart 100 for microgrid supervision according to an embodiment; and
FIGS. 2A and 2B illustrate an energy management state machine operational flowchart for a 3-level priority function determination according to an embodiment.

### DETAILED DESCRIPTION OF THE INVENTION

Aspects of the present disclosure provide an energy management state machine that includes a selector function. The selector function performs mode selection on the microgrid level to drive the microgrid in a specific operating condition. The selection process in the state machine has three levels of priority that may be determined. The three-level priority determination is based on a determination function that sequentially identifies the operating condition of the microgrid and utilizes logic to decide which of a plurality of functions should be selected for carrying out microgrid operation. The energy management state machine determines the microgrid's operating condition through a combination of measurements and algorithm-based logic.

Embodiments of the present disclosure provide a method for customizing priority function preferences depending on selection of a grid code compliance standard. Embodiments of the present disclosure also provide a method for clustering critical microgrid measurements for grid-connected use cases by classifying them into various priority levels. A state machine enabling implementation of the methods is also provided. Advantageously, the state machine is simple and customizable based on user preferences and various inputs from a microgrid and a larger grid to which the microgrid is connected or is to be connected. The state machine is also scalable to accommodate varying sizes of microgrids with varying numbers of connected devices. The described state machine is also more flexible than conventional solutions, allowing a single state machine to be used across varying microgrids and ensuring all microgrid devices are compliant to user-selected or predetermined compliance standards.

In an embodiment, a method is provided for tracking and analyzing a microgrid's present operating condition through various measurements both internal and external to the microgrid from a point of common coupling (PCC) perspective.

In an embodiment, a selector algorithm is provided for making well-informed decisions through a 3-level priority determination to perform microgrid operating mode selection.

In an embodiment, a framework is provided for implementing an algorithm for clustering critical microgrid measurements for grid-connected use-cases by classifying them into various priority levels.

In an embodiment, a framework is provided for allowing a customized priority function preference to be selected based on the selection of a grid code compliance standard.

In an embodiment, the energy management state machine acts as a selector that deals with grid supported functions that are compliant with an industry standard, such as Institute of Electrical and Electronics Engineers (IEEE) 1547 or Comitato Elettrotecnico Italiano (CEI) 0-16. The energy management state machine can perform various grid connected energy management functions like rule-based active power (P) and reactive power (Q) setpoint distribution, IEEE 1547-compliant regulation curves, and ride-through functionalities. The energy management state machine considers user preferences, distribution system operator (DSO) setpoints, utility maintenance and outage information, and measurement and communication error scenarios, thereby accounting for microgrid operating conditions. Based on the operating conditions deduced from various inputs, the state machine may make determinations regarding how a microgrid will operate at both a current time and a future time.

Embodiments of the present invention enable compliance of all devices within a microgrid to one or more compliance standards. Specifically, because all devices within a microgrid are slave devices under the supervisory scheme carried out by embodiments of the disclosed state machine, all microgrid devices are brought into compliance by standards enforced by the state machine. Embodiments of the present invention also provide for an aggregated supervisory algorithm that reduced or eliminates the need for separate individual compliance-based control of devices in a microgrid. For example, conventional solutions require each battery of a microgrid to be individually controlled to ensure compliance, which may result in longer control processes than embodiments of the present disclosure that instead aggregate data for faster compliance of all batteries within the microgrid. Embodiments of the present disclosure also improve the reliability of power grids through this aggregated compliance approach.

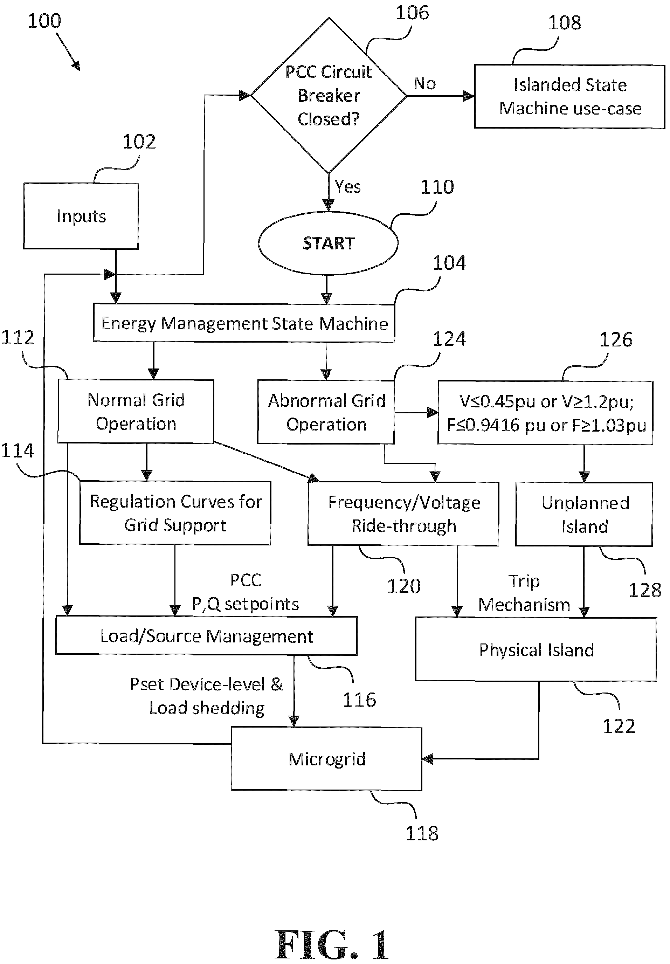

FIG. 1 illustrates an energy management state machine flowchart 100 showing how a state machine according to embodiments of the present invention can be updated and utilized for microgrid supervision. Inputs 102 are used to provide inputs for the energy management state machine 104 and to carry out query 106 to determine whether or not a point of common coupling (PCC) circuit breaker is closed. If it is determined that the PCC circuit breaker is not closed, an islanded state machine 108 may be implemented in which a supervised microgrid is disconnected from a primary utility line but remains energized to continue supplying the microgrid's local loads. Otherwise, if the PCC circuit breaker is not closed, a supervisory algorithm is started 110.

The inputs 102 include various types of inputs from both the microgrid and a larger grid to which the microgrid is connected. The microgrid inputs may include microgrid measurements like voltage, frequency, PCC active power, PCC reactive power, microgrid load information, and other like inputs. In some embodiments, the inputs 102 also include one or more other measurements and/or types of information, such as battery or device operational status, a battery state of charge (SOC), user preferences, anticipated load and supply schedules, anticipated outage information or schedules, measured or manually input grid abnormalities, microgrid health indicators, and error handling data. The inputs 102 from the larger grid to which the microgrid is connected may include one or more of grid health indicators that come from a static transfer switch (STS), maintenance signals, anticipated outage signals from a utility facility or device, and/or DSO setpoint commands from a grid operator. The energy management state machine 104 can determine, based on the inputs 102 it receives, whether the microgrid is in normal grid operation 112 or abnormal grid operation 124.

If, based on the inputs 102 and other signals it receives, the energy management state machine 104 determines that the microgrid is in normal grid operation 112, the state machine will establish PCC P and Q setpoints for load/source management 116. The PQ setpoints go to an inverter and change the output of batteries of the microgrid. In some embodiments, load/source management, in which loads of the microgrid are balanced, is accomplished using regulation curves for grid support 114, which may be stored as part of the state machine or otherwise accessed via the state machine. During normal grid operation 112, the state machine may also determine frequency and/or voltage ride-through thresholds 120 for load/source management 116. The frequency and/or voltage ride-through thresholds 120 may be based on standards set forth in IEEE 1547, CEI 0-16, or other regulatory and/or privately established standards. The frequency/voltage ride-through thresholds 120 may also be used to switch a trip mechanism, thereby establishing a physical island 122 to separate the microgrid from the primary utility lines. Whether load/source management and/or establishment of a physical island 122 is carried out, the resulting effects on the microgrid 118 are measured and then directed back to the energy management state machine 104. In some embodiments, the measurements from the microgrid 118 are sent to inputs 102 so that parameters or values of the inputs 102 can be updated and then sent to the energy management state machine 104. In some embodiments, measurements from the grid are sent as updates continually and directly to the energy management state machine 104.

If, based on the inputs 102 and other signals received, the energy management state machine 104 determines that the microgrid is in abnormal grid operation 124, then abnormal performance category analysis 126 can be carried out, in which compliance with various categories of threshold voltage and/or frequency values may be evaluated. In an embodiment, the category analysis 126 may be tailored for a Category II design under IEEE 1547. In some embodiments, the category analysis 126 may be tailored for a Category I or III design under IEEE 1547, or of another category or set of threshold values under CEI 0-16 or under another standard. If the category analysis 126 indicates that a trip mechanism should be actuated, an unplanned island sequence 128 may be initiated, causing physical island 122 to be established upon tripping a trip mechanism. The changes implemented in the microgrid 118 are then measured and forwarded to the energy management state machine 104.

In an embodiment, the regulation curves for grid support 114 are compliant with IEEE 1547 or CEI 0-16 in terms of voltage, power, power-factor, frequency, and reactive power dependent curves. In an embodiment, frequency/voltage ride-through thresholds 120 are configured to provide for IEEE 1547 or CEI 0-16 compliance during fault and grid dynamic events by performing voltage/frequency ride-through operations. In an embodiment, load/source management 116 is configured to enable power dispatch amongst microgrid devices based on a reference PCC active and reactive power that is tracked.

It will be readily understood that the embodiments illustrated in FIG. 1 and described above may be implemented in an iterative manner to provide real-time or near-real time measurements to the energy management state machine 104, thereby enabling immediate intervention when inputs 102 or measurements from the microgrid 118 necessitate such intervention. Such interventions may include, for example, establishing a physical island 122 via tripping a trip mechanism, thereby preventing damage to the microgrid, components thereof, and/or to the primary utility lines. In some embodiments, the foregoing methods may be implemented iteratively with a preset delay or with a delay that is dynamically adjusted by the energy management state machine 104 according to inputs 102 and based on whether circumstances observed via inputs 102 would necessitate more frequent or time-sensitive monitoring and/or intervention. This would allow the energy management state machine to operate more efficiently and cost-effectively for applications in which real-time monitoring is not necessary, or when safety requirements allow for a delay in intervention.

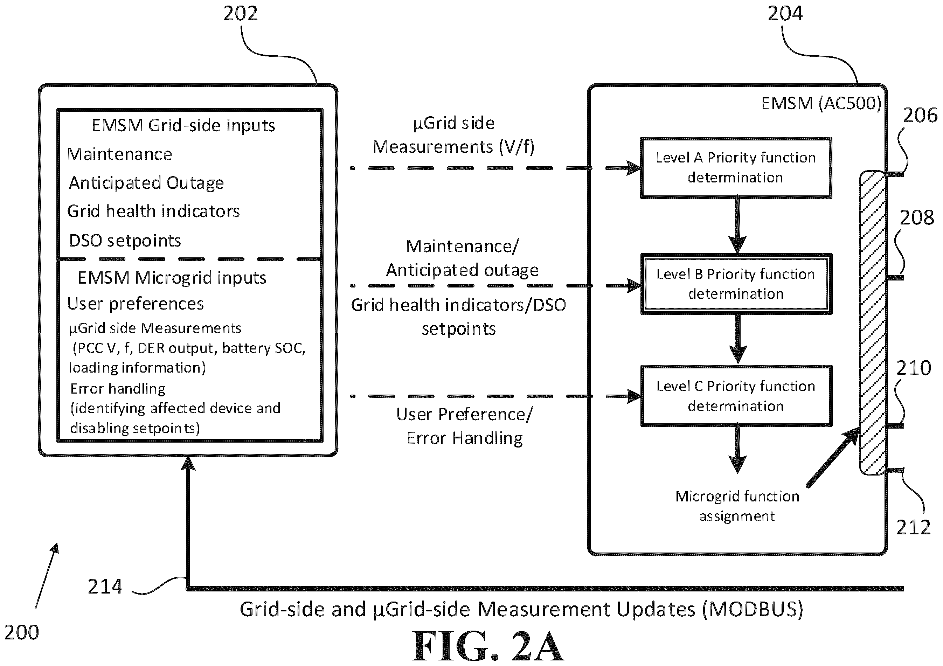

FIG. 2A illustrates a first part of an energy management state machine operational flowchart 200 for 3-level priority function determination. The operational flow includes inputs 202 that are used by the energy management state machine 204 to determine a microgrid function assignment. The microgrid function assignment results in one or more signals 206, 208, 210, 212 being output by the energy management state machine 204 for controlling operation of the microgrid and/or devices within the microgrid. The inputs 202 may be updated based on grid-side and microgrid-side measurement updates via an update signal 214. In some embodiments, the update signal 214 may include a MODBUS signal. In other embodiments, the update signal 214 may take a form based on a different serial data communication protocol.

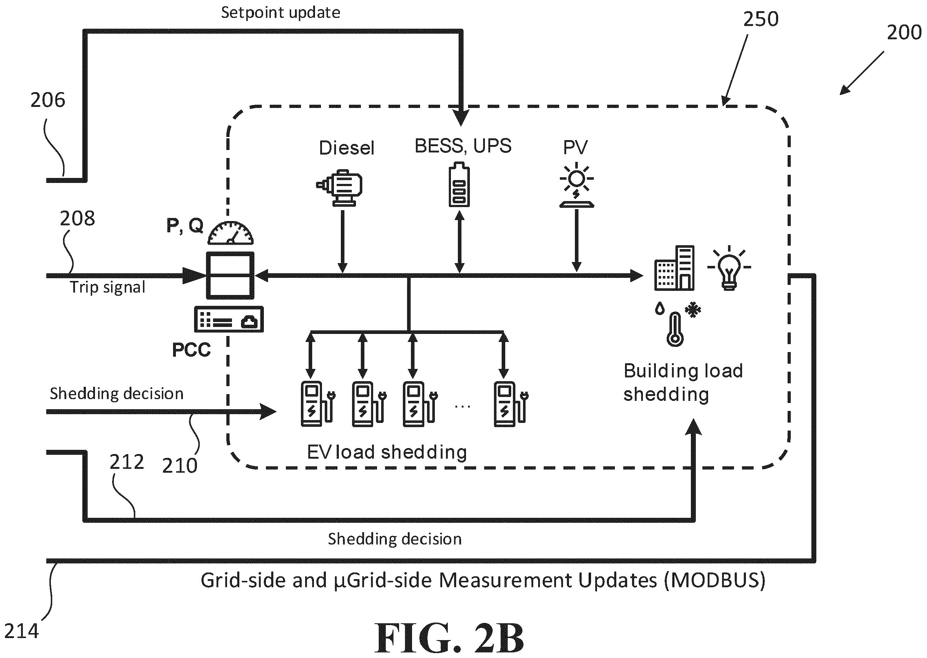

FIG. 2B illustrates a second part of the energy management state machine operational flowchart 200. A setpoint update signal 206 may be output by the energy management state machine to establish operational setpoints for various devices within microgrid 250. In the illustrated embodiment, for example, the setpoint update signal 206 may establish operational setpoints for a battery energy storage system, an uninterruptible power supply (UPS), a diesel generator, or a photovoltaic cell. It will be readily understood that varying types and quantities of devices may be included within microgrid 250 and controlled via the setpoint update signal 206 within the context of the present disclosure. A trip signal 208 may be output by the energy management state machine to determine whether a breaker should be tripped at a PCC, thereby islanding the microgrid. In some embodiments, the trip signal 208 may be configured to trip a breaker that only disconnects a portion of a microgrid or just a number of all available devices of the microgrid. A first shedding decision signal 210 may be output to provide for load shedding among devices within the microgrid 250. For example, the first shedding decision signal 210 may be used to provide for load shedding among a plurality of electric vehicle charging stations. A second shedding decision signal 212 may also be provided for load shedding among a second category or subset of devices in the microgrid 250. For example, the second shedding decision signal 212 may be used to provide for load shedding of one or more buildings or facilities within the microgrid.

The inputs 202 include grid-side inputs and microgrid inputs. The grid-side inputs can include, for example, maintenance data, anticipated outage data, grid health indicators, and DSO setpoints. The microgrid inputs can include, for example, user preferences, microgrid-side measurements, and error handling data, such as data that identifies an error-affected device and disabling setpoints. The microgrid-side measurements can include, for example, PCC voltage, frequency, distributed electrical resource (DER) output, battery SOC, and loading information. Different inputs 202 serve as the basis for determining different levels of priority within the energy management state machine 204. For example, microgrid-side measurements may be used to make a first or so-called "Level A" priority function determination. Maintenance data, anticipated outage information, grid health indicators, and/or DSO setpoints may be used to make a second or so-called "Level B" priority function determination. User preferences and/or error handling data may be used to make a third or so-called "Level C" priority function determination.

Examples of user preferences include: a selection of a particular regulation curve; a specific active power (Pset) or reactive power (Qset), or a combination of both, that is to be tracked by the microgrid; and provision of dynamic voltage support as part of a voltage ride-through implementation while the microgrid voltage is in a normal operating region. The regulation curves can include, for example, V-Q, P-F, V-P, and other similar curves representing the relationship between microgrid attributes. Provision of dynamic voltage support may include supplying reactive power from the microgrid.

Even though a user may set certain preferences as described above, the microgrid's operating mode depends on the outcomes of the priority determination described in the present disclosure. For example, because a DSO commands higher priority than user preferences during a normal mode of operation of the microgrid, DSO commands will be used to operate a microgrid during a normal mode instead of user preferences. Accordingly, regardless of whether a user continues to provide user preferences, the microgrid will only operate based on user-selected user preferences when a priority determination reaches the decision to let the microgrid run on a user preferred operating mode. In an additional example, a user may select a user preference that the microgrid sends out a specific active power (Pset) and reactive power (Qset) to the larger grid as a part of a load/source management operation for set-point tracking. In this case, if the grid is in a normal operating condition and there is no command from the DSO to operate in a specific mode, then the energy management state machine's priority determination will arrive at the decision to operate based on user preference. Further detail regarding determining an operating condition and the role of user preferences is included in the present disclosure with reference to FIGS. 2A-2B and Tables 1-3.

In the illustrated embodiment, Level A priority is used to determine whether a microgrid is in normal or abnormal operation and whether a trip operation should be carried out. Accordingly, the energy management state machine may have three states for the Level A priority function: state (0) indicating an abnormal microgrid operation, state (1) indicating a normal microgrid operation, and state (2) indicating a trip operation. The Level A priority function determines the highest priority level signals of the energy management state machine. The output of the Level A priority function and the resulting operating state of the microgrid is determined according to Table 1, where voltage and frequency are received as inputs to the state machine and the output value of the Level A priority function has a value of (0), (1), or (2), wherein an output value of (0) indicates ride-through, (1) indicates unplanned islanding, and (2) indicates an action should be carried out based on DSO command or one or more user preferences.

**Table 1**

| Parameters | State: f(condition₁, ... condition_{N}) | Value of Function | Comments |
|---|---|---|---|
| Voltage/Frequency | 0, 0 | 0 | Select Ride-through |
| Voltage/Frequency | 1, 0 | 0 | Select Ride-through |
| Voltage/Frequency | 0, 1 | 0 | Select Ride-through |
| Voltage/Frequency | 2, 2 | 1 | Unplanned Islanding |
| Voltage/Frequency | 1, 2 | 1 | Unplanned Islanding |
| Voltage/Frequency | 2, 1 | 1 | Unplanned Islanding |
| Voltage/Frequency | 1, 1 | 2 | Action depends on DSO or user preference(s) |

Accordingly, the possible outcomes for the Level A priority function are: ride-through while either of microgrid voltage or frequency is in an abnormal state of operation; unplanned islanding if voltage or frequency enters a trip zone under a relevant compliance standard; and performing an action that is dependent on a DSO command or one or more user preferences.

Level B priority is used to gather information based on signals from the primary utility (e.g., the larger grid to which the microgrid is connected or intended to be connected) and DSO signals after the operating condition of the microgrid is determined based on the Level A priority function. The information gathered in Level B may include, for example, information regarding maintenance, anticipated outages of the utility, grid health status received from a microgrid's STS, if applicable, and/or DSO commands for the microgrid like setpoint tracking or specific mode of operation (e.g., by following a regulation curve for voltage-reactive power, voltage-active power, or other like regulation curves). The output of the Level A priority function are used by the Level B priority function. The Level B priority function thus receives values (0), (1), (3) from the Level A priority function. The Level B priority function also receives issue condition values and DSO condition values. The issue condition values (identified in Table 2 as "(NoMaintenance & NoOutage & Microgrid healthy)") include (0), indicating grid-side issues, and (1), indicating no issues. The DSO condition values include (1) indication PQ setpoints, and (2), indicating no PQ setpoints. The output of the Level B priority function is determined according to Table 2. The output of the Level B priority function has a value of (0), (1), (2), or (3), wherein an output value of (0) indicates ride-through, (1) indicates unplanned islanding, (2) indicates DSO commands, and (3) indicates actions that depend on one or more user preferences.

**Table 2**

| Parameters | State: f(LevelA, condition₁, ... condition_{N}) | Value of Function | Comments |
|---|---|---|---|
| FromLevelA & (NoMaintenance & NoOutage & Microgrid healthy) & DSO | 0, x, x | 0 | Select Ride-through |
| FromLevelA & (NoMaintenance & NoOutage & Microgrid healthy) & DSO | 2, 0, x | 0 | Select Ride-through |
| FromLevelA & (NoMaintenance & NoOutage & Microgrid healthy) & DSO | 1, x, x | 1 | Unplanned Islanding |
| FromLevelA & (NoMaintenance & NoOutage & Microgrid healthy) & DSO | 2, 1, 1 | 2 | DSO commands |
| FromLevelA & (NoMaintenance & NoOutage & Microgrid healthy) & DSO | 2, 1, 2 | 3 | Action depends on user preference(s) |

Accordingly, the possible outcomes for the Level A priority function include, for example: ride-through while either of microgrid voltage or frequency is in an abnormal state of operation; unplanned islanding if voltage or frequency enters a trip zone under a relevant compliance standard; higher priority to DSO commands for tracking PQ setpoints in a normal state of operation; and following regulation curves.

Level C priority is the final priority level function determination that depends on one or more user preferences about a microgrid's mode of operating and the status of all measurable devices in the microgrid. The Level C priority function thereby helps the energy management state machine select the appropriate mode in the microgrid's normal operating condition by also considering special scenarios on devices that are local to the microgrid, such as, for example, device failure, overload, tracking issues, and more. Scenario detection is carried out by another module referred to herein as an error detecting and handling module. The analysis made available by the error detection and handling module is used to make device-specific operating mode selections regarding PCC power dispatch and publish a status indication as output to notify an end user of the microgrid about the selection.

The Level C priority function receives the output of the Level B priority function. The Level C priority function also receives a user preference wherein a value of (1) indicates regulation curves, a value of (2) indicates load/source management, and a value of (3) indicates ride-through dynamic voltage (DynV) support. The Level C priority function also receives an error detection value (identified in Table 3 as "(NoPVerr & NoBESSerr & NoDGerr & NoLoaderr)"), wherein a value of (0) indicates a sensor error and a value of (1) indicates no sensor error. The output of the Level C priority function is determined according to Table 3.

**Table 3**

| Parameters | State: f(LevelA, condition₁, ... condition_{N}) | Value of Function | Comments |
|---|---|---|---|
| FromLevelB & User preference & (NoPVerr & NoBESSerr & NoDGerr & NoLoaderr) | 0, x, x | 0 | Select ride-through |
| FromLevelB & User preference & (NoPVerr & NoBESSerr & NoDGerr & NoLoaderr) | 1, x, x | 1 | Unplanned Islanding |
| FromLevelB & User preference & (NoPVerr & NoBESSerr & NoDGerr & NoLoaderr) | 2, x, x | 2 | Track PQ setpoints using load/source management and disable PQset to abnormal sensor |
| FromLevelB & User preference & (NoPVerr & NoBESSerr & NoDGerr & NoLoaderr) | 3, 1, 0 | 3 | Select user preferred regulation curve and disable PQset to abnormal sensor |
| FromLevelB & User preference & (NoPVerr & NoBESSerr & NoDGerr & NoLoaderr) | 3, 2, 0 | 4 | Select user preferred load/source management and disable PQset to abnormal sensor |
| FromLevelB & User preference & (NoPVerr & NoBESSerr & NoDGerr & NoLoaderr) | 3, 3, 0 | 5 | Select user preferred ride-through with DynV support and disable PQset to abnormal sensor |
| FromLevelB & User preference & (NoPVerr & NoBESSerr & NoDGerr & NoLoaderr) | 3, 1, 1 | 6 | Select user preferred regulation curve |
| FromLevelB & User preference & (NoPVerr & NoBESSerr & NoDGerr & NoLoaderr) | 3, 2, 1 | 7 | Select user preferred load/source management |
| FromLevelB & User preference & (NoPVerr & NoBESSerr & NoDGerr & NoLoaderr) | 3, 3, 1 | 8 | Select user preferred ride-through with DynV support |

The Level C priority function determination is the final stage of the energy management state machine. The resulting function out of Level C is selected as the microgrid's operating state. Based on the operating state selection, the microgrid follows the appropriate section of the algorithm according to FIG. 1.

The possible outcomes of the Level C priority function include: ride-through while any of microgrid voltage or frequency is in an abnormal state of operation; initiating an unplanned island if voltage or frequency enters a trip zone according to a compliance standard; granting higher priority to DSO commands for tracking PQ setpoints in a normal state of operation; following regulation curves; selecting a user preference for operating the microgrid in ride-through mode; tracking regulation curves; and/or tracking a PQ set-point using load/source management to determine energy management state machine selection for a microgrid's state of operation.

It will be readily understood that although specific values for inputs and outputs of the energy management state machine and its various priority functions have been described above, that the specific values may be substituted with different numerical values without departing from the spirit of the present disclosure.

The state machine described herein may be executed by a controller configured to control operation of the microgrid. For example, in an embodiment, the state machine may be executed in a controller that directly controls the microgrid and that is implemented at the PCC. In some embodiments, the controller may control operation of the microgrid from a remote location. For example, microgrid measurement updates may be sent to a cloud-based control system configured to send control signals to the microgrid, thereby enabling computing and control hardware (e.g., one or more processors and controllers) to be located off-site.

The use of the terms "a" and "an" and "the" and "at least one" and similar referents in the context of describing the invention (especially in the context of the following claims) are to be construed to cover both the singular and the plural, unless otherwise indicated herein or clearly contradicted by context. The use of the term "at least one" followed by a list of one or more items (for example, "at least one of A and B") is to be construed to mean one item selected from the listed items (A or B) or any combination of two or more of the listed items (A and B), unless otherwise indicated herein or clearly contradicted by context. The terms "comprising," "having," "including," and "containing" are to be construed as open-ended terms (i.e., meaning "including, but not limited to,") unless otherwise noted. Recitation of ranges of values herein are merely intended to serve as a shorthand method of referring individually to each separate value falling within the range, unless otherwise indicated herein, and each separate value is incorporated into the specification as if it were individually recited herein. All methods described herein can be performed in any suitable order unless otherwise indicated herein or otherwise clearly contradicted by context. The use of any and all examples, or exemplary language (e.g., "such as") provided herein, is intended merely to better illuminate the invention and does not pose a limitation on the scope of the invention unless otherwise claimed. No language in the specification should be construed as indicating any non-claimed element as essential to the practice of the invention.

Preferred embodiments of this invention are described herein, including the best mode known to the inventors for carrying out the invention. Variations of those preferred embodiments may become apparent to those of ordinary skill in the art upon reading the foregoing description. The inventors expect skilled artisans to employ such variations as appropriate, and the inventors intend for the invention to be practiced otherwise than as specifically described herein. Accordingly, this invention includes all modifications and equivalents of the subject matter recited in the claims appended hereto as permitted by applicable law. Moreover, any combination of the above-described elements in all possible variations thereof is encompassed by the invention unless otherwise indicated herein or otherwise clearly contradicted by context.

## Claims

1. A method of monitoring a microgrid, comprising:
receiving a plurality of inputs;
using a state machine to determine an output based on the plurality of inputs; and
outputting a control signal based on the output,
wherein the plurality of inputs include a microgrid-side voltage measurement and a microgrid-side frequency measurement; and
wherein the control signal is configured to control operation of the microgrid at a point of common coupling between the microgrid and a utility grid.

2. The method of claim 1, wherein using the state machine to determine the output based on the plurality of inputs further comprises determining the output based on at least a first priority function and a second priority function,
wherein the first priority function receives one or more of the plurality of inputs to determine a first priority function output, and
wherein the second priority function receives one or more of the plurality of inputs and the first priority function output to determine a second priority function output.

3. The method of claim 2, wherein the one or more inputs received by the first priority function include the microgrid-side voltage measurement and the microgrid-side frequency measurement.

4. The method of claim 3, wherein the first priority function output and the second priority function output are each one of a voltage or frequency ride-through selection, an unplanned islanding signal, action dependent on a distribution system operator command, and an action dependent on a user preference.

5. The method of one of claims 2 to 4, wherein the one or more inputs received by the second priority function include one or more of a maintenance status, an anticipated outage, a utility grid health indicator, and a distribution system operator setpoint.

6. The method of one of claims 2 to 5, wherein using the state machine to determine the output based on the plurality of inputs further comprises determining the output based on a third priority function,
wherein the third priority function receives one or more of the plurality of inputs and the second priority function output to determine a third priority function output.

7. The method of claim 6, wherein the one or more inputs received by the third priority function include one or more of a user preference and an error handling signal.

8. The method of claim 6 or 7, wherein the third priority function output is one of a voltage or frequency ride-through selection, an unplanned islanding signal, a regulation curve selection, an active and reactive power setpoint disabling signal, and a load or source management signal for managing devices of the microgrid.

9. The method of one of the preceding claims, further comprising:
measuring microgrid-side operational parameters;
updating the plurality of inputs based on the measured microgrid-side operational parameters; and
iteratively repeating the steps of the method such that the state machine receives iteratively updated inputs based on the measured microgrid-side operational parameters,
wherein the operational parameters include a voltage and frequency of the microgrid.

10. The method of claim 9, wherein the operational parameters further include one or more of an active power measured at the point of common coupling, a reactive power measured at the point of common coupling, a battery state of charge, and microgrid loading information.

11. The method of one of the preceding claims, wherein the control signal is configured to operate the microgrid in compliance with standards set forth in Institute of Electrical and Electronics Engineers (IEEE) 1547 or Comitato Elettrotecnico Italiano (CEI) 0-16.

12. The method of claim 11, wherein the control signal is configured to operate the microgrid with a ride-through voltage or ride-through frequency in compliance with IEEE 1547 or CEI 0-16.

13. The method of claim 11 or 12, wherein the control signal is configured to island the microgrid if the plurality of inputs include abnormal voltage and frequency signals from the microgrid.

14. A non-transitory computer-readable medium having processor-executable instructions stored thereon, wherein the processor-executable instructions, when executed by one or more processors, facilitate performance of a method for monitoring a microgrid comprising:
receiving a plurality of inputs;
using a state machine to determine an output based on the plurality of inputs; and
outputting a control signal based on the output,
wherein the plurality of inputs include a microgrid-side voltage measurement and a microgrid-side frequency measurement; and
wherein the control signal is configured to control operation of the microgrid at a point of common coupling between the microgrid and a utility grid.

15. A system comprising one or more processors which, alone or in combination, are configured to provide for execution of a method comprising:
receiving a plurality of inputs;
using a state machine to determine an output based on the plurality of inputs; and
outputting a control signal based on the output,
wherein the plurality of inputs include a microgrid-side voltage measurement and a microgrid-side frequency measurement; and
wherein the control signal is configured to control operation of the microgrid at a point of common coupling between the microgrid and a utility grid.
